# EUROPEAN PATENT APPLICATION

(11) **EP 2 270 683 A1**
(43) Date of publication of application: **05.01.2011**
(21) Application number: 09425254.1
(22) Date of filing: 01.07.2009
(51) Int. Cl.: G06F 17/30

(54) **Procedure for searching of data or a group of data in a database**

(71) Applicant: Universita' degli studi di Brescia, 25121 Brescia (IT); Queen Mary and Westfield College, Mile End Road London E1 4NS (GB)
(72) Inventor: Benini, Sergio, 25121 Brescia (IT); Leonardi, Riccardo, 25121 Brescia (IT)
(74) Representative: Pulieri, Gianluca Antonio

(57) **Abstract**

The present invention deals with a method to search one item or a group of similar items within a number of items stored in a database, where each item is assigned with a representative graphical information, such as an image, sound, or text which identifies and characterizes the item itself. The method includes the following steps:
a) organizing the database as a relational structure where all the representative information are grouped in a number of subsets according to a predetermined criterion of similarity, so that the information contained in each subset show differences in the informative content below a predetermined threshold value;
b) associating to at least one of the subsets a probability value which depends on the subset content and/or from the results of previous search procedures and/or from the status of the ongoing search;
c) randomly selecting one among the subsets according to the probability value assigned at the previous step, and simultaneously reproducing at least one part of the information contained in the same subset;
d) if the searched item is not within the reproduced ones, repeating at least the previous step, until the user is able to find some interesting information.

## Description

The present invention relates to a method to search one item or a group of similar items within a plurality of items stored in a database, in particular a non-annotated database.

In the last years, following the development of multimedia systems for storing, organizing and retrieving video-content, new task domains and user requirements evolved.

The present invention refers in particular to the professional broadcasting and film-making industry, where the original raw footage, referred to as rushes is filmed and stored with the idea to be used and reused as necessary. This application, in fact, is characterized by the fact that this video material is mainly unstructured, unedited, redundant and with few or no on-screen text. Therefore the user does not know what rushes repository contains before his exploration, and he faces the problem of how to search and rapidly find one item or a group of items, in particular a frame or a group of frames which represent videos of interest.

In addition to this, in certain cases, even if data are annotated, it could be beneficial in terms of time to perform a search by using some parameters such as graphical or chromatic characteristics, instead of using text-based search.

In any case, the method of search here described is applicable to any data storage, where each item is assigned with a representative graphical information which identifies and characterizes the item itself. For example, in the case of video archives, the graphical information is an image or a frame extracted from the video.

In general, two methods for acquiring information from an image database do exist: query based methods, and browsing based ones.

In case of non-annotated database, the methods based on queries require that the user chooses one sample image which is compared by the system with the other images in the database in order to extract the most similar ones according to predetermined similitude criteria.

The sample image can be extracted from the database, or it cam be imported from external systems (for example Google Image Search), or again it can be specified by the user, for example by specifying its visual characteristics.

Moreover, all known systems which employ a visual similitude criterion as a base for search do not have an efficient method for initializing the search in case of unknown content.

In general, it has been experimented that, in the examined case of searching an item or a group of items in a database of unknown a-priori content, the methods based on browsing are preferable to those based on queries, since they allow the user to get familiar with the archive content and to dynamically choose the search directions, for example as a function of the first results obtained while browsing. It is therefore clear how it is important the initial phase of accessing the database content.

Direct access to content is proposed in (W. Bailer and G. Thallinger, "A framework for multimedia content abstraction and its application to rushes exploration," in Proc. of CIVR '07. New York, NY, USA: ACM, 2007, pp. 146-153), where for exploring the database, the user starts from the visualization of the complete content set. The user then choose to group the visual content into subset (clustering) on the base of one of the available low-level features. Depending on the subset dimension, a fraction of the subset can be selected in order to show a content preview. The user can then decide to select a subset of clusters that seems to be relevant and discard the others, or repeat clustering on the current content set using another feature. A possible drawback lies in the fact that since the user might not be completely aware of the searched content, the selection of a relevant feature to perform the clustering is not trivial. Moreover, by starting from the whole content set, the risk of overwhelming the user with too many information is sensible.

It is therefore very urgent, especially in the professional field, the need to search an item or a group of items in a database, in particular in non-annotated ones where the content is unknown to the user, in a more rapid and efficient way than those offered by known search methods.

The object of the present invention is therefore to propose a search procedure to satisfy this need of the users, in particular professional ones, and to overcome the drawbacks of existing search methods.

This object is achieved by a method to search one item or a group of similar items within a number of items stored in a database, where each item is assigned with a representative graphical information, such as an image, sound, or text, which identifies and characterizes the item itself, which in a general form of implementation includes the following steps:
a) organizing the database as a relational structure where all the representative information are grouped in a number of subsets according to a predetermined criterion of similarity, so that the information contained in each subset show differences in the informative content below a predetermined threshold value;
b) associating to each of at least one part of the subsets a probability value on the basis of one or more of the following criteria:
   - the quantity of information associated to the subset;
   - the presence in the subset of information which have been already selected by the user during previous searches;
   - the proximity of the subset to another subset which has been judged before by the user as being close regarding its content to that of the searched item or the searched group of items;
   - the previous selection of the subset during the same search procedure;
   - the number of subsets;
c) randomly selecting one among the subsets according to the probability value assigned at the previous step, and simultaneously reproducing at least one part of the information contained in said subset;
d) if the searched item is not within the reproduced ones, repeating at least step c), until the user is able to find an interesting information.

In other words, the database is first organized so that its content is subdivided in a number of subsets containing similar information. For example, starting from some subsets, other can be created from these by setting progressively lower threshold values. Then the algorithm randomly selects a subset and at least a part of its information is displayed. Therefore, advantageously, the number of information presented to the user is limited, in any case inferior to the total amount of the database content. In addition to this, advantageously, the subset can be selected not only with a probability which depends on the total number of subsets, i.e. with an uniform probability density function, but also with one or a combination of other criteria, which depend for example from the informative content of the subsets themselves, from the outcome of previous searches by the same user, or from the ongoing state of the search itself. In particular, subsets previously selected from the user and then discarded since of no interest, will have a null probability of being selected again (or very low, in order to take into account the possibility of error of assessment of a subset by the user, or the fact that not all information of a subset are displayed, for example due to the high number of information in relation with the available space for the visualization).

In this way, subsets with larger information, or with more different information (i.e. with higher entropy), will be more likely selected than those with lower informative content.

In the same way, subsets containing information that have been selected in previous browsing of the database as interesting, will have higher probability of being selected again.

As a further advantage, each subset can be endowed with a value of interest which can be set by the user, for example through a bar indicator or similar pointer displayed close to the subset representation. By modifying this value of interest, the user can modify, in particular update, the level of probability of a selected subset. Doing so, for example, the probability of subsets that are in proximity to the selected one will be also promoted or degraded with respect to the current probability value, depending on the value of interest of the selected subset expressed by the user.

According to another aspect of the invention, after the user has selected one item, the representative information contained in the smallest subset including the selected item are reproduced. In other words, the user, once selected an item of interest, is driven to the subset that contains the most similar information to the selected one, that is the subset with the lowest similitude threshold and therefore the smallest one. In fact, this subset is the one with the highest probability to contain the searched item or the searched group of items. After this, it will be up to the user to go back by selecting and accessing the content of subsets containing the selected item with intermediate threshold levels.

In order to allow the user to interact with these database subsets, in one form of implementation, after the user has selected one item, at least one part of the subsets of the relational structure, which contain the selected information, is displayed.

Further characteristics and advantages of the search method according to the invention will be clear from the following description of practical, non limiting, examples of implementation, with reference with the attached drawings, wherein:
- figure 1 shows an example of how a database can be organized in a hierarchical structure;
- figure 2 shows a display snapshot for the user interaction with the method according to the invention;
- figure 3 shows a tree representation of the hierarchical structure of the database; and
- figure 4 shows the display snapshot of figure 2, in the case of the procedure when the user is driven to the smallest subset containing the selected item.

The search method described in the following is applied to a database of non-annotated videos, where each video is identified and characterized by at least one image (frame) extracted from the video itself. As before mentioned, the method according to the invention is applicable to any database, even annotated or partially annotated, where each item is assigned with a representative graphical information, such as an image, sound, or text, which identifies and characterizes the item itself.

In a first phase, in order to empower the search process and accelerate the content understanding of the database by the user, the database is organized in a hierarchical structure of frames, as described in the following.

Unfortunately semantic clustering (i.e. a grouping based on semantic categories) is not easily applicable to raw video material (in the following simply rushes), since this content lies mostly un-annotated in huge databases, i.e. without being categorized with the help of semantic labels.

Therefore one feasible approach when dealing with such type of data, is to hierarchically arrange content by performing a visual clustering on a set of key-frames extracted from the database, which identify and characterize the related videos.

Even if the reliability of the visual clustering algorithm might strongly affect the effectiveness of the search, the provision of a content preview (or summary) as collection of key-frames fully matches with the browsing strategy, as it allows for fast exploration of large unknown content sets, without the requirement to specify a query in advance.

In addition to this, the availability of hierarchical previews brings the following advantages: (i) it supports the user in quickly gaining an overview of the unknown content set, (ii) it organizes material by visual similarity, and (iii) it selects representative content for visualization.

The proposed hierarchical structure is obtained by a visual clustering of N key-frames of the database, which have been previously extracted from shots (i.e. video segments corresponding to single camera takes). As described in (S. Benini, A. Bianchetti, R. Leonardi, and P. Migliorati, "Extraction of significant video summaries by dendrogram analysis," in Proc. of ICIP'06. Atlanta, GA, USA, 8-11 October 2006), frames are first divided into non-overlapping blocks. Block color components in the LUV color space are used as training vectors to a vector quantization algorithm (Tree-Structured-Vector-Quantization) to compute code-books (which are sets of code-words) of increasing size 2^m (m = 0, 1, 2,...) until a pre-determined constraint on distortion is satisfied (or a maximum code-book size is reached). Then, an attempt is made to reduce the number of code-words in the interval [2^{m-1},2^{m}] without exceeding the imposed distortion. By doing so, the frame visual content is represented through the obtained dictionary of visual words. Grouping of key-frames is then achieved by a hierarchical clustering algorithm that, for estimating the mutual similarity, employs the cross-effect of the two dictionaries on the two frames. A hierarchical summary S={L₁, L₂, ..., Lₙ} organized on n levels Lᵢ, where the number of levels n<<N is finally obtained by exploiting the properties of the dendrogram tree and the codebook distortions associated to different branches of the dendrogram (see (S. Benini, A. Bianchetti, R. Leonardi, and P. Migliorati, "Extraction of significant video summaries by dendrogram analysis," in Proc. of ICIP'06. Atlanta, GA, USA, 8-11 October 2006) for further details).

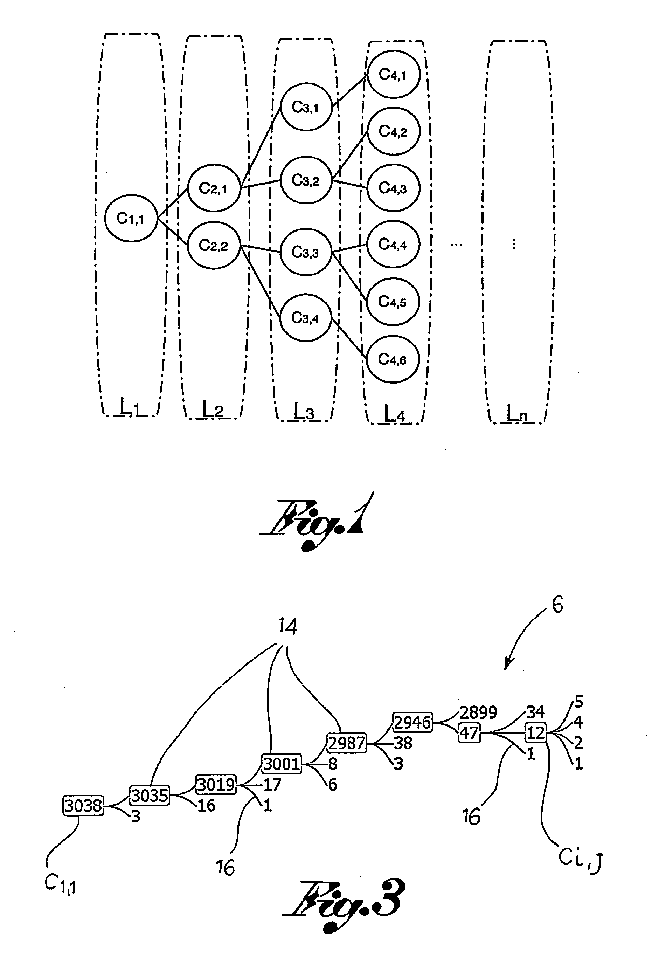

As shown in Figure 1, each level Li of the hierarchy contains the whole set of N frames organised in a number of visually similar clusters C_{i,j}, i.e. Lᵢ={C_{i,1}, C_{i,2}, ..., Cᵢ,ₓᵢ} where Xᵢ is the cardinality of Lᵢ and where Xᵢ₋₁< Xᵢ for all i.

Such an organization enables structured browsing: once the user identifies an interesting frame, he can interactively request more similar content from the same cluster, or refine his search by descending into the hierarchy, thus restricting the scope of his quest.

Even if the grouping of similar content is based on visual similarity rather than semantic categories, the proposed solution assists the browsing process by reducing the semantic gap between low-level features and high-level concepts familiar to the user.

Considering the hierarchical organization of the content, the most straightforward way of presenting it to the user is applying a hierarchical visualization approach which provides, at the same time, an easy initialization of the browsing.

A number of information visualization techniques for displaying hierarchical structures have been proposed in the past, such as Hyperbolic Tree (J. Lamping and R. Rao, "Laying out and visualizing large trees using a hyperbolic space," in Proc. of UIST '94. New York, NY, USA: ACM, 1994, pp. 13-14), Treemaps (B. Johnson and B. Shneiderman, "Tree-maps: a space-filling approach to the visualization of hierarchical information structures," in Proc. of VIS '91. Los Alamitos, CA, USA: IEEE Computer Society Press, 1991, pp. 284-291), (B. Bederson, "Photomesa: a zoomable image browser using quantum treemaps and bubblemaps," in Proc. Of UIST '01. New York, NY, USA: ACM, 2001, pp. 71-80) and Cone Trees (G. G. Robertson, J. D. Mackinlay, and S. K. Card, "Cone trees: animated 3d visualizations of hierarchical information," in Proc. of CHI '91. New York, NY, USA: ACM, 1991, pp. 189-194), (M. A. Hearst and C. Karadi, "Cat-a-cone: an interactive interface for specifying searches and viewing retrieval results using a large category hierarchy," in Proc. of SIGIR '97. New York, NY, USA: ACM, 1997, pp. 246-255). These visualization solutions, though helpful for solving the problem of visual clutter for large number of tree-nodes, do not always serve as efficient aid for the user, since the excess complexity of the user interface sometimes induces an additional obstacle for performing the browsing task.

The proposed visualization solution instead allows to keep a low-level of complexity, while preserving the information about the structure. For example the solutions for hierarchical video/image browsing described in (D. Borth, C. Schulze, A. Ulges, and T. Breuel, "Navidgator-Similarity Based Browsing for Image & Video Databases," in Proc. of KI 2008, vol. II, Kaiserslautern, Germany, September 2008, pp. 22-29), (G. Schaefer and S. Ruszala, "Hierarchical image database navigation on a hue sphere," in Proc. of ISVC06, 2006, pp.II: 814-823) and (S. Krishnamachari and M. Abdel-Mottaleb, "Image browsing using hierarchical clustering," in Computers and Communications, IEEE Symposium, vol. 0. Los Alamitos, CA, USA: IEEE Computer Society, 1999, p. 301) are characterized by a lower level of interface complexity. In these applications, browsing is mostly initialized by selecting one of the displayed frames. However applying these solutions to a large rushes archive and considering the limited display space, it is not clear how to initialize the exploration if no significant or query-similar frame is in the first visualized set.

Another aspect of the search method according to the invention is therefore to assist the user in the initialization of browsing. The solutions presented before either limit the set of the displayed frames or reduce the image sizes in order to present them all. Both choices negatively affect the beginning of the browsing, since user might not find the appropriate frame or their size is too small to understand the content. The solution here proposed is then to assist user's understanding of where to find items of interest (and to reduce the time for browsing initialization) by displaying a user interface which allow the display of a tree map of the content space together with content previews.

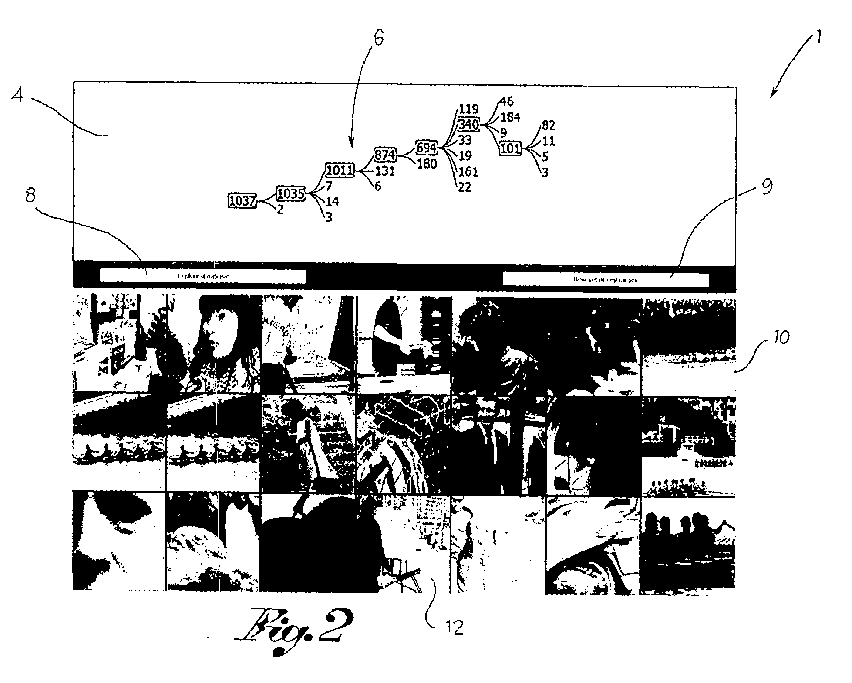

The interface provides a visual navigation tool, forming a thread between the concealed structure of the content and the user's needs. A screenshot of the whole user interface is shown in Figure 2. Screenshot 1 contains an upper window 4 where the hierarchical preview organization is presented using a tree view 6 and two buttons 8, 9 which allow the interactive content browsing. Screenshot 1 also contains a lower window 10 where the grid of frames 12 of a selected subset is shown.

As it will be better explained in the following, the left button 8 allows the user to command a new random subset selection; the right button 9 allows the user to visualize other frames 12 from the same subset, in the case when the lower window 10 cannot display all frames of a selected subset.

In other words, the two windows 4, 10 of the interface allow both the content browsing through an interactive search and the visualization of the video frames.

In the upper window 4 the hierarchical preview organization is presented using a tree view 6, as better shown in Figure 3. The tree view is chosen since it is a common way of representing a hierarchical structure.

The displayed tree contains the frames organized in a hierarchical structure and in case of large amount of content it might consist of a huge number of nodes 14 (the subsets) and branches 16, where each node 14 represents a cluster of visually similar frames. Due to the limited display dimensions, visualizing the entire tree 6 at any time is space-consuming and unnecessary. An adequate solution is to dynamically change the number of displayed levels: a node can be expanded to reveal its child-elements, if any exist, or collapsed to hide departing branches and child-elements.

In a similar way, the user does not see the entire tree while browsing, but only the set of nodes 14 actually involved in his exploration. To highlight the user's search path, all nodes starting from the root node C_{1,1} to the currently explored node C_{i,j} are highlighted, for example by colour-encoding. Considering that there are no meta-data on the observed videos, and that the representative information is purely visual, the only property that is displayed for each node is the number of frames 12 contained in the node (see Figure 3).

Advantageously, for giving an insight into the node content, instead of putting a representative frame, in the bottom window a set of frames is displayed, since the content of a node can often be too diverse to be represented by a single frame (this is specifically true for nodes in the higher levels of the hierarchy).

According to one form of implementation, when the user selects a certain node, this is highlighted, its own child-elements are shown in the next tree level, and the related preview (i.e. a set of its own frames) is shown in the lower window. The preview frames belonging to the currently visited node are displayed on a grid, where frames which are temporally close in the original video, are placed sequentially in order to assist the content understanding by the user. Positioning the mouse over a frame returns the information about the name of the video it belongs to. In this way the user can distinguish if similar frames placed close together in the grid belong or not to the same video.

In short the tree metaphor in the interface upper window 4 fulfils the following tasks:
- it provides a visualization overview at all times;
- it describes the parent-child relations between visual content;
- it provides the information on the number of key-frames in each node

- it facilitates the comprehension of the current position within the database by the use of colour;
- it supports the user moving forward, backward and making progressive search refinements.

Therefore the interface 1 provides both global and local overview at all times, an important property considering the nature of rushes video data and the retrieval task.

The user preserves the global perspective by seeing the database structure and his current position at each step of the search, while getting more information by observing at the same time the visual summary of the selected node.

Since a rushes database is too large to be explored in a single step, it is necessary to provide tools to model a sort of virtual tour through the repository. Browsing needs an entry point and it consequently develops according to the retrieved results. Therefore, to perform an efficient exploration the user should be able at least (i) to find one item that interests him to start his navigation with (ii), to identify search directions in which to proceed and (iii) to easily access and grasp the repository content.

In order to meet these needs, the search method according to the invention proposes in the following three novel solutions regarding (i) browsing initialization, (ii) random browsing and (iii) random content access.

While most hierarchical visualization solutions use single frames to represent the node content and start the browsing (for example in D. Borth, C. Schulze, A. Ulges, and T. Breuel, "Navidgator-Similarity Based Browsing for Image & Video Databases," in Proc. of KI 2008, vol. II, Kaiserslautern, Germany, September 2008, pp. 22-29), in the here proposed method the initialization is supported both by frame and node selection.

By clicking on any node C_{i,j} of the hierarchy, the node content preview is visualized, i.e. all or a part of the frames it contains. Then the user can use the sequential access to other nodes and move backward and/or forward through the tree to refine his search, while constantly being aware of the current position inside the database, thanks to the highlighted search path.

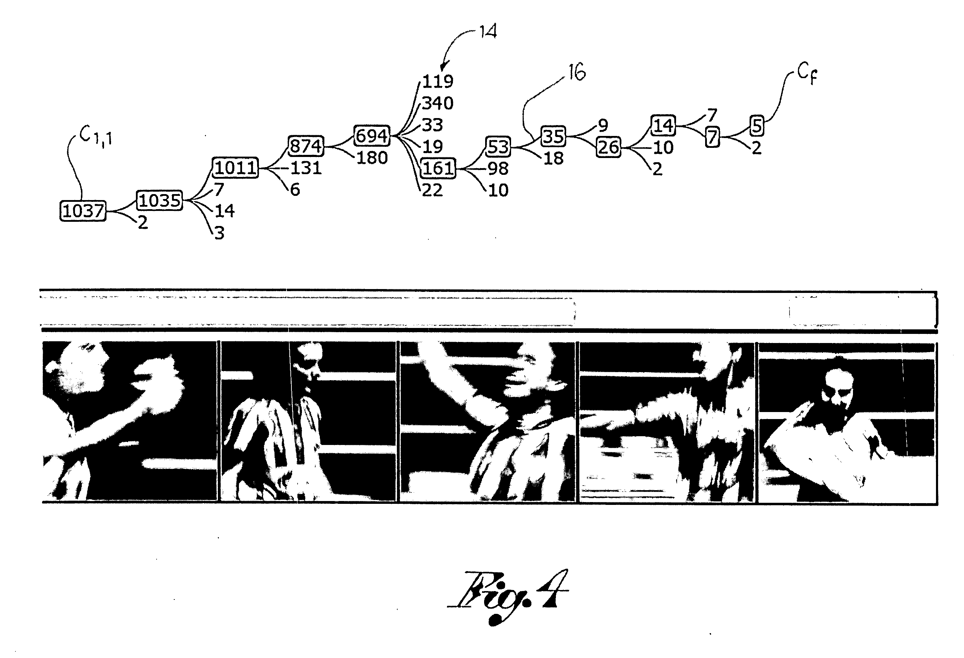

According to a particularly advantageous aspect of the invention, called "jump to leaf" procedure, in case the user clicks on one interesting frame at any moment of his search, in the upper window the whole tree is exploded from the root C_{1,1} to the leaf node C_{f}, which is the smallest subset containing the selected frame, i.e. the subset which contains the most similar frames to the selected one. Moreover, all nodes of the tree which contain the selected frame are highlighted to emphasize the search path. At once, in the lower window 10, the frames of the preview of the leaf node C_{f}, which contains the selected frame, is shown on the grid, as shown in Figure 4.

Starting from the leaf node containing the selected frame (at level Lₙ), the user is then able to climb backward the hierarchy and sequentially access the highlighted nodes at intermediate levels Lₙ₋₁, Lₙ₋₂, ..., in order to refine his search and obtain the largest set of similar frames that might interest him.

This direct access to a node at the leaf level Lₙ, especially if combined with the backward sequential climbing allows to improve the search effectiveness, especially when the user's aim is to retrieve all the video segments showing similar content which are present in the database.

During browsing, even a professional user might be completely unaware of which direction to take to discover the desired content. When using traditional user interfaces, in case an interesting frame is not presented at first, it has been observed that users often perform some random attempts of exploration with the options endowed by the application, in order to look for something that might better suit their queries.

A possible way of identifying new search directions is to provide a novel system functionality, called "random browsing", which imitates the user random behaviour in such situations. So, in case the displayed frames in the current node are of no interest for the user, the application allows to randomly select another node, visualize its summary thus opening a new search direction.

This browsing strategy is modeled by a statistical law, where its density function represents the probability to access one node of the hierarchy and display its summary. According to one form of implementation, when the user selects this browsing modality, the algorithm randomly selects one level of the hierarchy with a uniform probability; then, inside the selected level, the probability of accessing one specific node is defined by one (or a combination) of the following criteria:

1. The entropy of the node: the probability of selecting a node is proportional to the quantity of information in the node itself, so that more informative nodes are more likely to be chosen with respect to less informative ones;

2. The node dimension: the probability of selecting a node is proportional to the quantity of information in the node itself, so that nodes containing more frames are promoted in the selection process with respect to smaller ones;

3. The user's browsing history: the probability of accessing a node containing frames that stimulated in the past the user's interest is higher than nodes which have been disregarded by him in the past;

4. The user's feedback: if the currently visited node somehow interests the user, for example by a bar indicator or similar pointer, or by expressing a quantitative judgment, the random browsing is statistically directed to close nodes, while if the shown content is totally different from the searched one, the algorithm will take the user on far branches of the hierarchy.

Criteria from 1 to 4 can be combined with different weights in order to shape the probability law which determines the access to nodes inside one level of the hierarchy.

If the visual summary of the randomly selected node, which consists of a limited number of frames belonging to the related node, is of no interest for the user, he can continue his random walk to another node, for example by clicking on the left button 8 in the interface 1. This access method allows the user to randomly browse through the different content sets of frames at different levels of hierarchy, until the user is able to find an interesting frame, from which he can refine his search results, for example by a jump to a leaf procedure and/or a sequential access.

Both random and sequential explorations are assisted by the display of the visual content previews in the bottom application window 10. The proposed solution displays for example a grid showing 21 frames, where the image size is chosen so that the user can inspect the visual content summary without the need of any additional interaction (e.g. zooming, etc.).

The aim of a visual summary is to show a set of representative frames of each node in the hierarchy. However there are no semantic labels that could assist us in defining the most appropriate representative set for the selected node. Other already proposed solutions, such as showing the centroid image, or showing one frame for child node, cannot either guarantee an optimal selection of representative frames.

For this reason, from each node a limited set of frames to be displayed is randomly extracted. Although a restricted number of images cannot completely represent the content of a node, this approach avoids information overflow or inadequately re-sized frames and benefits from the advantage of low computational complexity. In case the user wants to perform further exploration inside the same node, he can request for additional content from the same node, for example by clicking on the right button 9 of the interface 1. In this case a new random set is then extracted from the node and presented to the user on the display.

In conclusion, the proposed method for browsing and searching one item or a group of items combines visualization techniques and structured browsing with methods for generating hierarchical summaries, which are useful for fast grasping of the database content. The advantage of the method according to the invention lies in modeling the user browsing by a random access to the database structures and to its content. Preferably this random asses to database structures takes into consideration the content of the structure subsets and/or the results of previous searches and/or the choices performed by the same user during the ongoing search. The presented techniques turn to be useful in order to identify new search directions in the case of unknown content and to retrieve one or more video segments of interest, for example by directly jumping to the smallest subset of the structure which contains an interesting information and climbing back along the hierarchical structure, in a rapid and intuitive way, in order to retrieve all video segments of interest for the user.

To the forms of implementation of the search method according to the invention, a man skilled in the art, in order to satisfy contingent and specific requirements, may apply modifications, adaptations and substitutions of elements with others equivalent, without departing from the scope of protection as defined by the appended claims. Each of the features described as belonging to a particular embodiment can be implemented independently from the other embodiments described.

## Claims

1. Method to search one item or a group of similar items within a plurality of items stored in a database, where each item is assigned with a representative graphical information, such as an image, sound, or text, which identifies and characterizes the item itself, the method comprising the following steps:
a) organizing the database as a relational structure where all the representative information are grouped in a plurality of subsets according to a predetermined criterion of similarity, so that the information contained in each subset show differences in the informative content below a predetermined threshold value;
b) associating to each of at least one part of the subsets a probability value on the basis of one or more of the following criteria:
- the quantity of information associated to the subset;
- the presence in the subset of information which have been already selected by the user during previous searches;
- the proximity of the subset to another subset which has been judged before by the user as being close regarding its content to that of the searched item or the searched group of items;
- the previous selection of the subset during the same search procedure;
- the number of subsets;
c) randomly selecting one among the subsets according to the probability value assigned at the previous step, and simultaneously reproducing at least one part of the information contained in the same subset;
d) if the searched item is not within the reproduced ones, repeating at least the previous step until the user is able to find an interesting information.

2. Method according to claim 1, where the quantity of information of a subset is associated to the entropy of the subset and/or to the number of items within the subset.

3. Method according to claim 1 or 2, where each subset can be assigned with a level of interest by the user, and where the probability value of a selected subset can be updated by modifying this level of interest.

4. Method according to any of the previous claims, where, if a selected subset does not contain an interesting information, before step c) said subset is associated to a probability value lower than the probability value the subset had before being selected.

5. Method according to any of the previous claims, wherein, after the user has selected one item, all representative information contained in the smallest subset including the selected item are reproduced.

6. Method according to any of the previous claims, wherein, after the user has selected one item, at least one part of the subsets of the relational structure which contain the selected information is displayed, so that to allow the user to select any of these subsets and access their content.

7. Method according to any of the previous claims, wherein items or groups of items to be searched are videos, and where the representative information related to each items are frames extracted from the related videos.

8. Method according to claim 7, wherein the reproduction phase of at least one part of the representative information contained in a subset comprises a simultaneous visualization on a display of a grid of images.

9. Method according to any of the previous claims, wherein the relational structure is a hierarchical structure which comprises a number of levels (Lᵢ), where each levels contains all representative information of the database which are grouped in a plurality of subsets (C_{i,j}), and where to at least one subset (C_{i,j}) of a level (Lᵢ) is linked at least one child subset (C_{(i+1),j}) of a deeper level(Lᵢ₊₁), with the exception of the last level.

10. Method according to claim 9, wherein the random selection of a subset in the structure includes the following steps:
- randomly selecting one level of the structure according to a discrete probability function which is uniformly distributed among all levels;
- associating to at least a part of the subsets of the selected level a probability value according to one or more of the following criteria:
- the quantity of information associated to the subset;
- the presence in the subset of information which have been already selected by the user during previous searches;
- the proximity of the subset to another subset which has been judged before by the user as being close regarding its content to that of the searched item or the searched group of items;
- the previous selection of the subset during the same search procedure;
- the number of subsets of the selected level;
- randomly selecting one of the subsets of the selected level according to the probability value assigned at the previous step.

11. Method according to claim 9 or 10, wherein the representation of the structure subsets which contain the selected information comprises the visualization of at least one part of the structure path which goes from the subset on the first level containing the selected information, passing through the subsets on intermediate levels, each subset being suitable for being selected by the user for accessing the representative information which is therein contained.

12. Method according to anyone of the claims 7-11, wherein at least one part of the images contained in a subset and at least one part of the graphical representation of the relational structure which represents the subset itself and at least its child subsets are simultaneously displayed.

13. Method according to claim 12, wherein the number of images which are contained in each subset is associated to the graphical representation of the subset itself.

14. Method according to any of the previous claims, wherein, if only a part of the information of a selected subset is displayed, the remaining information are suitable for being displayed under a user's command.

15. Method according to any of the previous claims, wherein the reproduced information of a subset are randomly chosen.

## Amended claims

### Amended claims in accordance with Rule 137(2) EPC.

**1.** Method to search one item or a group of similar items within a plurality of items stored in a database, where each item is assigned with a representative graphical information, such as an image or text, which identifies and characterizes the item itself, the method comprising the following steps:
a) organizing the database as a relational structure where all the representative information are grouped in a plurality of subsets according to a predetermined criterion of similarity, so that the information contained in each subset show differences in the informative content below a predetermined threshold value;
b) associating to each of at least one part of the subsets a probability value on the basis of one or more of the following criteria:
- the quantity of information associated to the subset;
- the presence in the subset of information which have been already selected by the user during previous searches;
- the proximity of the subset to another subset which has been judged before by the user as being close regarding its content to that of the searched item or the searched group of items;
- the previous selection of the subset during the same search procedure;
- the number of subsets;
c) selecting one subset among the subsets according to the probability value assigned at the previous step, and reproducing at least one part of the information contained in said selected subset;
d) if the searched item is not within the reproduced ones:
- at least in the case, in step b), the probability value is based only on the number of subsets, associating to said selected subset a probability value lower than the probability value the subset had before being selected;
- repeating at least step c) until the user is able to find an interesting information.

**2.** Method according to claim 1, where the quantity of information of a subset is associated to the entropy of the subset and/or to the number of items within the subset.

**3.** Method according to claim 1 or 2, where each subset can be assigned with a level of interest by the user, and where the probability value of a selected subset can be updated by modifying this level of interest.

**4.** Method according to any of the previous claims, where, if a subset selected according to step c) does not contain the searched item, said subset is associated to a probability value lower than the probability value the subset had before being selected.

**5.** Method according to any of the previous claims, wherein, after the user has selected one item, all representative information contained in the smallest subset including the selected item are reproduced.

**6.** Method according to any of the previous claims, wherein, after the user has selected one item, at least one part of the subsets of the relational structure which contain the selected information is displayed, so that to allow the user to select any of these subsets and access their content.

**7.** Method according to any of the previous claims, wherein items or groups of items to be searched are videos, and where the representative information related to each items are frames extracted from the related videos.

**8.** Method according to claim 7, wherein the reproduction phase of at least one part of the representative information contained in a subset comprises a simultaneous visualization on a display of a grid of images.

**9.** Method according to any of the previous claims, wherein the relational structure is a hierarchical structure which comprises a number (i) of levels (Lᵢ), where each level contains all representative information of the database, said representative information being grouped in a plurality (j) of subsets (C_{i,j}) within each level (Li), and where at least one subset (C_{i,j}) of a level (Lᵢ) is linked to at least one subset (C_{(i+1),j}) of a next level (Lᵢ₊₁), with the exception of the last level.

**10.** Method according to claim 9, wherein the random selection of a subset in the structure includes the following steps:
- selecting one level of the structure according to a discrete probability function which is uniformly distributed among all levels;
- associating to at least a part of the subsets of the selected level a probability value according to one or more of the following criteria:
- the quantity of information associated to the subset;
- the presence in the subset of information which have been already selected by the user during previous searches;
- the proximity of the subset to another subset which has been judged before by the user as being close regarding its content to that of the searched item or the searched group of items;
- the previous selection of the subset during the same search procedure;
- the number of subsets of the selected level;
- selecting one of the subsets of the selected level according to the probability value assigned at the previous step.

**11.** Method according to claim 9 or 10, wherein the representation of the structure subsets which contain the selected information comprises the visualization of at least one part of the structure path which goes from the subset on the first level containing the selected information, passing through the subsets on intermediate levels, each subset being suitable for being selected by the user for accessing the representative information which is therein contained.

**12.** Method according to anyone of the claims 7-11, wherein at least one part of the images contained in a subset and at least one part of the graphical representation of the relational structure which represents the subset itself and at least its child subsets are simultaneously displayed.

**13.** Method according to claim 12, wherein the graphical representation of each subset comprises an indication of the number of images which are contained in said subset.

**14.** Method according to any of the previous claims, wherein, if only a part of the information of a selected subset is displayed, the remaining information are suitable for being displayed under a user's command.

**15.** Method according to any of the previous claims, wherein the reproduced information of a subset are randomly chosen.
